# EUROPEAN PATENT APPLICATION

(11) **EP 2 725 540 A1**
(43) Date of publication of application: **30.04.2014**
(21) Application number: 13180750.5
(22) Date of filing: 16.08.2013
(51) Int. Cl.: G06Q 30/02, G06Q 20/32

(54) **Techniques to maximize retail traffic**

(30) Priority: 26.10.2012 US 201213661477
(71) Applicant: NCR Corporation, Duluth, GA 30096 (US)
(72) Inventor: Chalk, Andrew, Dallas, TX Texas 75204 (US)
(74) Representative: MacLeod, Roderick William

(57) **Abstract**

Techniques for maximizing retail traffic are provided. A retailer defines or provides a service to automatically define a promotion to increase retail traffic and business. The promotion is dynamically delivered to specific consumers based on defined criteria for selecting the specific consumers. The promotion may be automatically turned off when a desired level of traffic is reached at the retailer.

## Description

Consumers are increasingly using kiosks to conduct business with enterprises. The kiosks come in a variety of sizes and are used for a variety of purposes. Some kiosks are drive through, such as fast food establishments, pharmacies, banks, and the like. Other kiosks are stationary located in gas stations, airlines, grocery stores, department stores, and the like.

In addition, what is considered a kiosk is evolving with today's technology. For example, digital signs now provide advertisements and mechanisms for users to interact with the displays to perform transactions. Such mechanisms include blue tooth communication, Near Field Communication (NFC), Quick Response (QR) code scanning, Wi-Fi communication, and the like. In fact, even a consumer's mobile device can be used as a kiosk these days.

Enterprises are also seeking to reach consumers on their devices in a variety of manners, such as through promotions offered electronically on consumer phones. One popular service providing these promotions on behalf of enterprises is Groupon (trade mark). However, Groupon also causes a variety of issues with enterprises because the deals offered can overwhelm an enterprise and the enterprise has little control over the deals, such as number accepted, time issued, and fees paid to Groupon. As a result, although Groupon has proved to be a good third-party service for an enterprise to reach consumers with deals, the lack of control of those deals and the excessive control exerted by Groupon has proved problematic for many enterprises.

Moreover, the decision to offer a promotion may need to be in real time, which is not really available with Groupon and those promotions may also need to be just as quickly turned off, which is not so straightforward in Groupon. Still further, who receives the promotions is often of utmost concern because blanketing an area with promotions may cause more problems than the benefits of promotions in the first place.

In various embodiments, techniques for maximizing retail traffic are presented. According to an embodiment, a method for maximizing retail traffic is provided.

Specifically, a promotion is defined for increasing traffic at a retailer. Dynamically causing the promotion to be dynamically pushed to specific consumers deemed most likely to use the promotion. Finally, a progress for the promotion is managed as well as its effect on increasing the traffic.

According to a first aspect of the present invention there is provided a processor-implemented method programmed in a non-transitory processor-readable medium and to execute on one or more processors of a machine configured to execute the method, comprising: defining, at the machine, a promotion to increase traffic at a retailer; dynamically, at the machine, causing the promotion to be dynamically pushed to specific consumers deemed most likely to use the promotion; and managing, at the machine, a progress for the promotion and its effect on increasing the traffic.

Defining optionally further includes interactively receiving the promotion from a retail manager via an interface.

Defining optionally further includes dynamically receiving the promotion from an automated service that is initiated based on a detected present traffic at the retailer.

Defining optionally further includes identifying criteria with the promotion for selecting the specific consumers.

Identifying optionally further includes recognizing at least one criterion for selecting the specific consumers as a geographic proximity of registered mobile devices with respect to a geographical location of the retailer.

Defining optionally further includes identifying conditions with the promotion for dynamically terminating the promotion when a present traffic within the retailer is deemed sufficient for a defined success of the promotion.

Dynamically causing optionally further includes sending the promotion to a third-party promotion service for delivery to the specific consumers.

Dynamically causing optionally further includes directly sending the promotion to the specific consumers.

Dynamically causing optionally further includes delivering the promotion as text messages to mobile devices registered to the specific consumers.

Dynamically causing optionally further includes delivering the promotion as data to apps processing on mobile devices registered to the specific consumers.

Managing optionally further includes defining the progress as a table occupancy rate for tables within the retailer.

Managing optionally further includes dynamically terminating or modifying the promotion based on the progress.

According to a second aspect of the present invention there is provided a processor-implemented method programmed in a non-transitory processor-readable medium and to execute on one or more processors of a mobile device configured to execute the method, comprising: receiving, at the mobile device, a real time promotion defined by a server retail traffic manager and custom defined by a retailer to dynamically increase traffic at the retailer; and redeeming, from the machine, the real time promotion at the retailer associated with the promotion.

Receiving optionally further includes receiving the real time promotion as a text message.

Receiving optionally further includes receiving the real time promotion as interactive data on the mobile device.

Receiving optionally further includes receiving the real time promotion based on a present geographical location of the mobile device relative to a geographical location of the retailer.

Redeeming optionally further includes pre-ordering and pre-paying for the real time promotion.

Redeeming optionally further includes scanning a Quick Response (QR) tag or barcode when entering the retailer to automatically redeem the real time promotion.

According to a third aspect of the present invention there is provided a system comprising: a server having memory configured with a server retail traffic manager that executes on the server; and a distributing device configured to distribute a mobile app to a mobile device of a consumer, the mobile device having memory configured with the mobile app that executes on the mobile device; wherein the server retail traffic manager is configured to custom define a promotion for a retailer to increase traffic for the retailer and configured to cause the promotion to be dynamically delivered to consumer via the mobile device, the mobile app configured to dynamically redeem the promotion at the retailer.

The server retail manager is optionally configured to dynamically communicate the promotion to each Point-Of-Sale (POS) device or terminal within the retailer.

These and other aspects of the present invention will be apparent from the following specific description, given by way of example, with reference to the accompanying drawings, in which:

FIG. 1 is a diagram of a method for maximizing retail traffic, according to an example embodiment;

FIG. 2 is a diagram of another method for maximizing retail traffic, according to an example embodiment; and

FIG. 3 is a diagram of a retail traffic control system, according to an example embodiment.

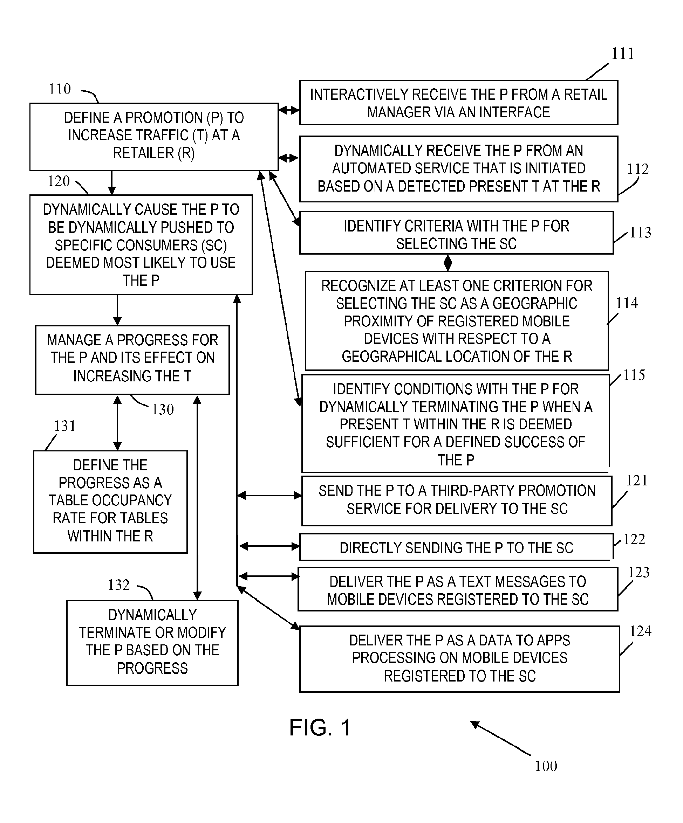

FIG. 1 is a diagram of a method 100 for maximizing retail traffic, according to an example embodiment. The method 100 (hereinafter "server retail traffic manager") is implemented as instructions programmed and residing on a non-transitory computer-readable (processor-readable) storage medium and executed by one or more processors, server, web-based Internet portal, cloud, virtual machine (VM), etc.) over a network connection. The processors are specifically configured and programmed to process the server retail traffic manager. The server retail traffic manager also operates over a network. The network is wired, wireless, or a combination of wired and wireless.

In an embodiment, the server retail traffic manager executes as a retail server service, which is accessible over a network, such as the Internet. In other instances, the server retail traffic manager is a third-party cloud-based service that a retail establishment subscribes to and is accessible to other services of the retail establishment via a cloud processing environment.

The techniques provided herein and below solve a variety of business needs. Consider the following situation, when business is slow at a food service establishment (retailer), the manager wants to run a promotion to create traffic (increase business or table occupancy). For example: just after the midweek lunchtime rush and/or Monday evenings.

The manager also wants to stop the promotion once the establishment is full. So, the problem that the manager of the retailer wants to solve is how to get the promotion out to people most likely to take it up (redeem the promotion).

As will be more completely described herein, a manager uses an interface to create a custom-defined promotion. In an embodiment, the promotion is then dynamically sent to a third-party promotion distributor, such as Groupon, which uses location data to send the promotion to its users. In another case, the retailer can send out the promotion to all users of the retailer's goods or services; here, a mobile app runs on Android (trade mark) and Apple (trade mark) smart phones and other devices to receive the promotion. In some cases, the third-party service can receive a monthly subscription fee from the restaurants using the techniques provided herein.

It is noted that Groupon is but one example of a third-party distribution company and others are possible as well including new third-party distributing services.

Moreover, in an embodiment, when a manager creates a promotion and activates it, the promotion is automatically added to all terminals at the establishment (retailer) associated with the manager.

In some embodiments, the manager can configure the technique to automatically send out a promotion when floor traffic falls below a certain "trigger level." This may be ascertained by activity levels at a Point of Sale (POS) terminal in the retail establishment falling below a defined level for a defined period of time.

In some embodiments, the techniques can also be used to vet recipient (consumer) suitability for deals using criteria beyond just their current location; for example, whether the recipient has opted in to receive promotions, preferences of the consumer, previous promotions that the consumer has used, and the like.

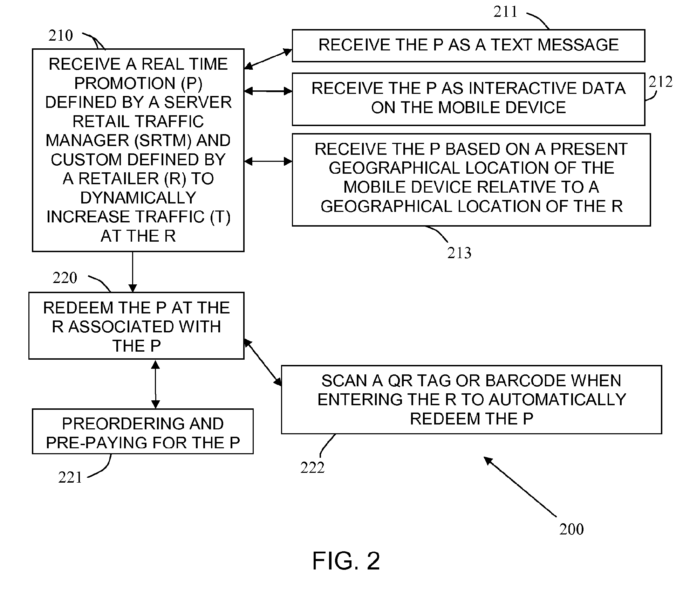

Consider the following process flow, the server retail traffic manager runs on a POS terminal or on a server (or cloud) with POS terminals having access to the server retail traffic manager. The server retail traffic manager allows the manager to create and manage the promotion. This automatically adds the promotion to the restaurant front-of-house interfaces and a server controller piece of the server retail traffic manager receives deals from food service establishments and dynamically sends those deals (custom promotions) to daily deal sites. Each food service establishment can also be authenticated and its subscription with the server controller validated. The deals are presented on consumers' smart phones/tablets having mobile apps (described below with reference to the FIG. 2). These mobile apps obtain location data and provide to the controller where deals are then sent to the consumers who meet deal criteria, including location data limitations.

It is within this context that the server retail traffic manager is now discussed with reference to the FIG. 1.

At 110, the server retail traffic manager defines a promotion to increase traffic at a retailer. A "promotion" is a multifaceted data structure that can include a variety of information beyond just a specific deal. Some of this information is described herein and below. Moreover, "traffic" refers to revenue or a retailer or a metric that is used to gauge what revenue is likely to be, such as table occupancy at a restaurant.

According to an embodiment, at 111, the server retail traffic manager interactively receives the promotion from a retail manager via an interface. The interface can guide the manager in defining the promotion and any other limitations (as discussed below, the limitations may relate to enforcement, delivery, and management of the promotion).

In another case, at 112, the server retail traffic manager dynamically receives the promotion from an automated service that is initiated based on a detected present traffic at the retailer. In other words, dynamic custom policy enforcement can be done to detect events that trigger the automated service into action to define the promotion and send the custom-defined promotion to the server retail traffic manager.

In an embodiment, at 113, the server retail traffic manager identifies criteria with the promotion for selecting specific consumers.

Continuing with the embodiment of 113 and at 114, the server retail traffic manager recognizes at least one criterion for selecting the specific consumers as a geographic proximity of registered mobile devices with respect to a geographical location of the retailer. So, one criterion is location based and a distance range is compared with respect to the physical location of the retailer.

According to an embodiment, at 115, the server retail traffic manager identifies conditions with the promotion for dynamically terminating the promotion when a present traffic within the retailer is deemed sufficient (such as based on policy or threshold comparison) for a defined success of the promotion.

At 120, the server retail traffic manager dynamically causes the promotion to be dynamically pushed to specific consumers deemed most likely to use the promotion.

In an embodiment, at 121, the server retail traffic manager sends the promotion to a third-party promotion service for delivery to the specific consumers.

In another case, at 122, the server retail traffic manager directly sends the promotion to the specific consumers.

In one situation, at 123, the server retail traffic manager delivers the promotion as text messages to mobile devices registered to the specific consumers.

Alternatively, at 124, the server retail traffic manager delivers the promotion as data to apps processing on mobile device registered to the specific consumers.

At 130, the server retail traffic manager manages a progress for the promotion and its effect on increasing the traffic.

According to an embodiment, at 131, the server retail traffic manager defines the progress as a table occupancy rate for tables within the retailer.

In another case, at 132, the server retail traffic manager dynamically terminates or modifies the promotion based on the progress of the promotion. So, if full occupancy is approaching, the promotion can be scaled back to reduce traffic or if full occupancy has occurred the promotion can be terminated entirely.

One now appreciates how the server retail traffic manager can be a powerful retail tool to proactively manage and control retail traffic in real time.

FIG. 2 is a diagram of another method 200 for maximizing retail traffic, according to an example embodiment. The method 200 (hereinafter "mobile device agent") is implemented as instructions and programmed within a non-transitory computer-readable (processor-readable) storage medium that executes on one or more processors of a portable and mobile device; the processors of the device are specifically configured to execute the mobile device agent. The mobile device agent is also operational over a network; the network is wireless.

The processing of the mobile device agent reflects processing associated with a consumer's mobile device (such as tablet or smart phone) that receives an offer or promotion generated by the server retail traffic manager of FIG. 1. It is noted that the promotion may be generated by the server retail traffic manager but may be received by the mobile device agent from a third-party service, such as Groupon, Aloha Deals (trade mark), and others. Although, in some cases the promotion can be received by the mobile device agent directly from the server retail manager.

At 210, the mobile device agent receives a real time promotion defined by a server retail traffic manager (such as the one discussed above with reference to FIG. 1) and custom defined by a retailer to dynamically increase traffic at that retailer.

According to an embodiment, at 211, the mobile device agent receives the real time promotion as a text message.

In another case, at 212, the mobile device agent receives the real time promotion as interactive data on the mobile device. This can be received within an email received by the mobile device or within the mobile device agent that processes as an app on the mobile device.

In another case, at 213, the mobile device agent receives the real time promotion based on a present geographical location of the mobile device relative to a geographic location of the retailer.

At 220, the mobile device agent redeems the real time promotion at a retailer with the promotion.

According to an embodiment, at 221, the mobile device agent pre-orders and pre-pays for the real time promotion. This can be achieved via an interface on the mobile device that the consumer uses. This also ensures that the retailer can be assured the promotion is taken.

In another situation, at 222, the mobile device agent includes scanning a Quick Response (QR) (trade mark) tag or barcode when entering the retailer to automatically redeem the real time promotion. This can be achieved via a display monitor that displays the tag or code until the promotion is ended or via a print out of the tag or code that is removed by staff when the promotion is ended.

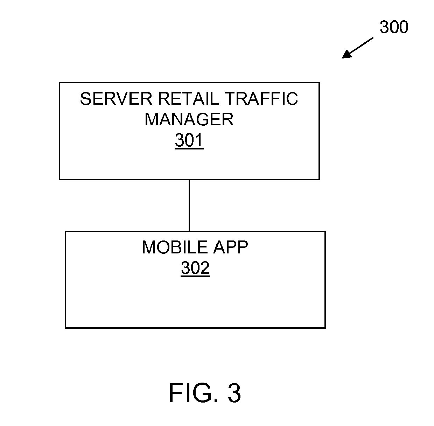

FIG. 3 is a diagram of a retail traffic control system 300, according to an example embodiment. The components of the retail traffic control system 300 are implemented as executable instructions and programmed within a non-transitory computer-readable (processor-readable) storage medium that execute on one or more processors of a network-based server (cloud, proxy, Virtual Machine (VM), etc.) or a mobile device (smart phone, tablet, etc.); the processors are specifically configured to execute the components of the retail traffic control system 300. The retail traffic control system 300 is also operational over a network; the network is wired, wireless, or a combination of wired and wireless.

The retail traffic control system 300 includes a server retail traffic manager 301 and a mobile device app 302. Each of these components and the interactions of each component are now discussed in turn.

The retail traffic control system 300 includes one or more processors configured with the server retail traffic manager 301, which resides and is implemented in memory or non-transitory computer-readable storage media; the server retail traffic manager 301 executes on the one or more processors. Example processing associated with the server retail traffic manager 301 was presented in detail above with reference to the method 100 of FIG. 1.

The server retail traffic manager 301 is configured to custom define a promotion for a retailer to increase traffic for the retailer and configured to cause the promotion to be dynamically delivered to consumer via the mobile device.

According to an embodiment, the server retail manager 301 is configured to dynamically communicate the promotion to each Point-Of-Sale (POS) device or terminal within the retailer. So, all employees are fully aware of the promotion and its details. Moreover, if the server retail manager 301 determines that the promotion is to be dynamically modified or terminated all such real time communication is provided to each of the POS devices or terminals within the retailer.

The retail traffic control system 300 also includes an app distributing device, which is configured to distribute a mobile app 302 to a mobile device of a consumer; the mobile app 302 once distributed resides and is implemented in memory or non-transitory computer-readable storage media of the mobile device; mobile app 302 executes on the one or more processors of the mobile device. Example processing associated with the mobile app 302 was presented in detail above with reference to the method 200 of FIG. 2.

The mobile app 302 is configured on the mobile device to dynamically redeem the promotion at the retailer.

In an embodiment, the mobile device is one of: a phone, a laptop, and a tablet.

The above description is illustrative, and not restrictive. Many other embodiments will be apparent to those of skill in the art upon reviewing the above description. The scope of embodiments should therefore be determined with reference to the appended claims.

In the foregoing description of the embodiments, various features are grouped together in a single embodiment for the purpose of streamlining the disclosure. This method of disclosure is not to be interpreted as reflecting that the claimed embodiments have more features than are expressly recited in each claim. Rather, as the following claims reflect, inventive subject matter lies in less than all features of a single disclosed embodiment.

## Claims

1. A processor-implemented method programmed in a non-transitory processor-readable medium and to execute on one or more processors of a machine configured to execute the method, comprising:
defining, at the machine, a promotion to increase traffic at a retailer (step 110);
dynamically, at the machine, causing the promotion to be dynamically pushed to specific consumers deemed most likely to use the promotion (step 120); and
managing, at the machine, a progress for the promotion and its effect on increasing the traffic (step 130).

2. The method of claim 1, wherein defining further includes interactively receiving the promotion from a retail manager via an interface (step 111).

3. The method of claim 1, wherein defining further includes dynamically receiving the promotion from an automated service that is initiated based on a detected present traffic at the retailer (step 112).

4. The method of claim 1, wherein defining further includes identifying criteria with the promotion for selecting the specific consumers (step 113).

5. The method of claim 4, wherein identifying further includes recognizing at least one criterion for selecting the specific consumers as a geographic proximity of registered mobile devices with respect to a geographical location of the retailer (step 114).

6. The method of any preceding claim, wherein defining further includes identifying conditions with the promotion for dynamically terminating the promotion when a present traffic within the retailer is deemed sufficient for a defined success of the promotion (step 115).

7. The method of any preceding claim, wherein dynamically causing further includes sending the promotion to a third-party promotion service for delivery to the specific consumers (step 121).

8. The method of any preceding claim, wherein dynamically causing further includes directly sending the promotion to the specific consumers (step 122).

9. The method of any preceding claim, wherein dynamically causing further includes delivering the promotion as text messages to mobile devices registered to the specific consumers (step 123).

10. The method of any preceding claim, wherein dynamically causing further includes delivering the promotion as data to apps processing on mobile devices registered to the specific consumers (step 124).

11. The method of any preceding claim, wherein managing further includes defining the progress as a table occupancy rate for tables within the retailer (step 131).

12. The method of any preceding claim, wherein managing further includes dynamically terminating or modifying the promotion based on the progress (step 132).

13. A system (300) comprising:
a server having memory configured with a server retail traffic manager (301) that executes on the server; and
a distributing device configured to distribute a mobile app (302) to a mobile device of a consumer;
wherein the server retail traffic manager (301) is configured to custom define a promotion for a retailer to increase traffic for the retailer and is configured to cause the promotion to be dynamically delivered to consumer via the mobile device, and the mobile app is configured to dynamically redeem the promotion at the retailer.

14. The system of claim 13, wherein the server retail traffic manager (301) is configured to dynamically communicate the promotion to each Point-Of-Sale (POS) device or terminal within the retailer.
